# EUROPÄISCHE PATENTSCHRIFT

(11) **EP 1 404 568 B1**
(45) Veröffentlichungstag und Bekanntmachung des Hinweises auf die Patenterteilung: **14.09.2005**
(21) Anmeldenummer: 03763676.8
(22) Anmeldetag: 01.07.2003
(51) Int. Cl.: B62D 65/00, B62D 25/08

(54) **VERSCHWENKBARE DECKELKLAPPE FÜR EIN CABRIOLET-FAHRZEUG**
PIVOTABLE COVER LID FOR A CONVERTIBLE
COUVERCLE PIVOTANT POUR UN CABRIOLET

(30) Priorität: 17.07.2002 DE 10232468
(43) Veröffentlichungstag der Anmeldung: 07.04.2004
(73) Patentinhaber: CTS Fahrzeug-Dachsysteme GmbH, 74321 Bietigheim-Bissingen (DE)
(72) Erfinder: HAHN, Gerald, 21149 Hamburg (DE)
(74) Vertreter: Müller, Gottfried
(86) Internationale Anmeldenummer: PCT/EP2003/006970
(87) Internationale Veröffentlichungsnummer: WO 2004/007267

(56) Entgegenhaltungen:
- EP-A- 0 846 584
- DE-A- 10 107 079
- DE-A- 10 135 581
- DE-A- 19 949 960
- DE-C- 19 910 763

## Beschreibung

Die Erfindung bezieht sich auf eine verschwenkbare Deckelklappe eines Cabriolet-Fahrzeug nach dem Oberbegriff des Anspruches 1.

Aus der Druckschrift DE 196 43 225 C1 ist ein verstellbares Fahrzeugdach bekannt, welches als zusammenhängendes, vormontiertes Modul mit einem verstellbaren Fahrzeugverdeck, einem Überrollbügel und einer Verdeckablage ausgeführt ist, in der das Fahrzeugverdeck in Öffnungsposition aufgenommen ist. Der Verdeckablage ist ein Verdeckkastendeckel zugeordnet, welcher an einem Aggregateträger gehalten ist, der das tragende Bauteil des gesamten Modules bildet, welches als vormontierte Baueinheit in das Fahrzeug eingesetzt werden kann.

In Cabriolet-Fahrzeugen verwendete Verdeckkastendeckel besitzen üblicherweise für ein automatisches Versenken und Anheben des Fahrzeugverdecks eine ansteuerbare Gelenkkinematik, über die der Verdeckkastendeckel in einer mit der Verdeckbewegung synchronisierten Stellbewegung zu öffnen bzw. zu verschließen ist.

Aus der Druckschrift EP 0 846 584 A1 ist ein an der Fahrzeugkarosserie schwenkbar gelagerter Verdeckkastendeckel für einen Verdeckkasten bekannt, der über eine Antriebseinrichtung anzuheben bzw. zu verschließen ist, die aus einem elektrischen Getriebemotor und einem Zahnstangenantrieb besteht, über den die Motorbewegung auf die Gelenkkinematik des Verdeckkastendeckels übertragen wird. Der Getriebemotor ist an der Fahrzeugkarosserie in einem vorderem, dem Fahrzeuginnenraum zugewandten Bereich gehalten, wobei der Zahnstangenantrieb sich vom mittig angeordneten Getriebemotor zu beiden Seitenbereichen erstreckt, in denen jeweils die Gelenkkinematik des Verdeckkastendeckels angeordnet ist.

Der aus der Druckschrift EP 0 846 584 A1 bekannte Verdeckkastendeckel und die dem Deckel zugeordnete Antriebseinrichtung eignet sich nicht für einen vormontierbaren, modularen Aufbau. Die Antriebseinrichtung und der Verdeckkastendeckel müssen einschließlich sämtlicher Kinematikteile unmittelbar in die Fahrzeugkarosserie eingebaut werden.

Aus der DE 199 43 582 A1 ist eine verschwenkbare Heckklappe für ein Cabriolet-Fahrzeug mit den Merkmalen des Oberbegriffs des Anspruchs 1 bekannt, die im rückwärtigen Bereich des Fahrzeuges einen Verdeckaufnahmeraum und einen sich hieran unmittelbar anschließenden Kofferraum überdeckt, wobei die Heckklappe mit Hilfe einer geeigneten Verstellkinematik zum Öffnen des Kofferraumes mit ihrer Heckkante und zum Freigeben eines Durchtrittes für die Ablagebewegung des Fahrzeugdaches mit ihrer Vorderkante anhebbar ist. Die Verstellbewegung wird mit Hilfe eines hydraulischen Stellgliedes durchgeführt, welches gemeinsam mit der als Mehrgelenkanordnung ausgeführten Verstellkinematik mit dem Heckdeckel verbunden ist. Das hydraulische Stellglied ist an einer Konsole abgestützt, die ebenfalls mit dem Heckdeckel verbunden ist, wobei die Konsole, das Stellglied, die Verstellkinematik und der Heckdeckel eine vormontierte Baueinheit bilden, die als vorgefertigtes Modul in ein Fahrzeug einzusetzen und über wenige Schrauben an der Konsole mit der Fahrzeugkarosserie zu verbinden ist.

Bei geschlossenem Heckdeckel erstrecken sich sowohl die Tragkonsole als auch das hydraulische Stellelement nach unten in den Bereich des Verdeckaufnahmeraumes bzw. des Kofferraumes hinein und beanspruchen dadurch einen verhältnismäßig großen Einbauraum.

Aus dem Dokument "So wird's gemacht", Seite 227, Verlag Delius, Klasing & Co., Bielefeld, 4. Auflage 1997, geht hervor, den Öffnungsvorgang der Heckklappe mit Hilfe eines passiven, als Gasdruckfeder ausgebildeten Federelementes zu unterstützen. Passive Federelemente bieten aber nur einen eingeschränkten Bedienkomfort. Es wird insbesondere nur die Heckklappenbewegung in eine Richtung unterstützt, wohingegen die entgegen gerichtete Heckklappenbewegung nicht unterstützt wird.

Nachteilig ist auch, dass die Gasdruckfeder und auch das Klappenscharnier der Heckklappe unabhängig voneinander direkt an die Fahrzeugkarosserie angeschraubt werden, wodurch der Montageaufwand erhöht ist. Außerdem benötigen die Gasdruckfeder und die Kinematik der Heckklappe einen verhältnismäßig großen Einbauraum.

Der Erfindung liegt das Problem zugrunde, eine verschwenkbare Deckelklappe für ein Cabriolet-Fahrzeug mit einfachen Maßnahmen in der Weise auszubilden, dass ein schneller Einbau in das Fahrzeug durchgeführt und eine hohe Betriebssicherheit gewährleistet werden kann, wobei der erforderliche Einbauraum für die Kinematik und das Stellglied der verschwenkbaren Deckelklappe so gering wie möglich gehalten sein soll.

Dieses Problem wird erfindungsgemäß mit den Merkmalen des Anspruches 1 gelöst.

Erfindungsgemäß ist vorgesehen, dass die Antriebseinheit, welche das Stellelement zur Verstellung der Deckelklappe beaufschlagt, an der Deckelklappe selbst gehalten ist. Des Weiteren bilden die Deckelklappe, die Gelenkkinematik, das Stellelement und die Antriebseinheit ein vormontiertes Einbaumodul, welches vor dem Einbau in das Fahrzeug zusammengebaut und im Hinblick auf seine Funktionsfähigkeit überprüft werden kann.

Auf diese Weise werden zwei Vorteile erzielt: Zum einen kann die Funktionsfähigkeit der Deckelklappe einschließlich der ihr zugeordneten Aggregate noch vor dem Einbau in das Fahrzeug getestet werden, so dass eventuelle Fehlfunktionen noch außerhalb des Fahrzeuges bzw. vor dem Einbau behoben werden können. Zum anderen ist auf Grund der Befestigung der Antriebseinheit an der Deckelklappe ein kurzer Verbindungsweg von der Antriebseinheit zum Stellelement gegeben, auf das die Bewegungsenergie der Antriebseinheit zum Verstellen der Gelenkkinematik zu übertragen ist. Da Antriebseinheit und Stellelement üblicherweise auf der Unterseite der Deckelklappe angeordnet sind - bezogen auf die Einbausituation der Deckelklappe -, liegen auch die für die Übertragung erforderlichen Bauteile auf der gleichen Deckelklappenseite, so dass Durchbohrungen in der Klappe bzw. in Wasserkanälen im Randbereich der Deckelklappe oder Dichtungen vermieden werden können. Hierdurch wird die Leckagesicherheit in beträchtlicher Weise verbessert.

Insgesamt ist eine kompakte Baueinheit darstellbar, die lediglich über eine elektrische Steckverbindung mit dem elektrischen System des Fahrzeuges verbunden werden muss und über wenige, definierte Punkte an der Fahrzeugkarosserie zu befestigen ist.

Gemäß der Erfindung sind Antriebseinheit und Stellelement hydraulisch ausgeführt. Als Antriebseinheit wird eine Hydraulikpumpe eingesetzt, das Stellelement ist ein Hydraulikzylinder, der von der Hydraulikpumpe entsprechend der durchzuführenden Stellbewegung mit Hydrauliköl versorgt wird. Die Hydraulikpumpe ist elektrisch betätigbar, die Steuerung bzw. die elektrische Energieversorgung erfolgt über das fahrzeugeigene Steuerungs- bzw. elektrische System.

Mit hydraulischer Betätigung - erfolgt die Ansteuerung der Antriebseinheit über ein fahrzeugeigenes Regel- und Steuersystem, welches in Abhängigkeit von Stellsignalen, die einen Fahrerwunsch repräsentieren, die elektrisch zu betätigende Antriebseinheit steuern. Die Stellsignale stammen beispielsweise für den Fall um eines Verdeckkastendeckels von der angeforderten Betätigung zur Verstellung eines Fahrzeugverdecks zwischen Schließ- und Ablagestellung bzw. umgekehrt.

Zweckmäßige Ausführungen sind der Erfindung der Figurenbeschreibung und den Zeichnungen zu entnehmen. Es zeigen:
- Fig. 1: eine verschwenkbare Deckelklappe für ein Cabriolet - Fahrzeug, welche gemeinsam mit einer Antriebseinheit, einem Stellelement und einer Gelenkkinematik ein vormontiertes Einbaumodul bildet,
- Fig. 2: die Deckelklappe in Einbauposition in einem Fahrzeug, dargestellt in Öffnungsstellung,
- Fig. 3: die eingebaute Deckelklappe in einer Zwischenposition zwischen Öffnungsstellung und geschlossener Stellung,
- Fig. 4: die Deckelklappe in geschlossener Position.

In den Figuren sind gleiche Bauteile mit gleichen Bezugszeichen versehen.

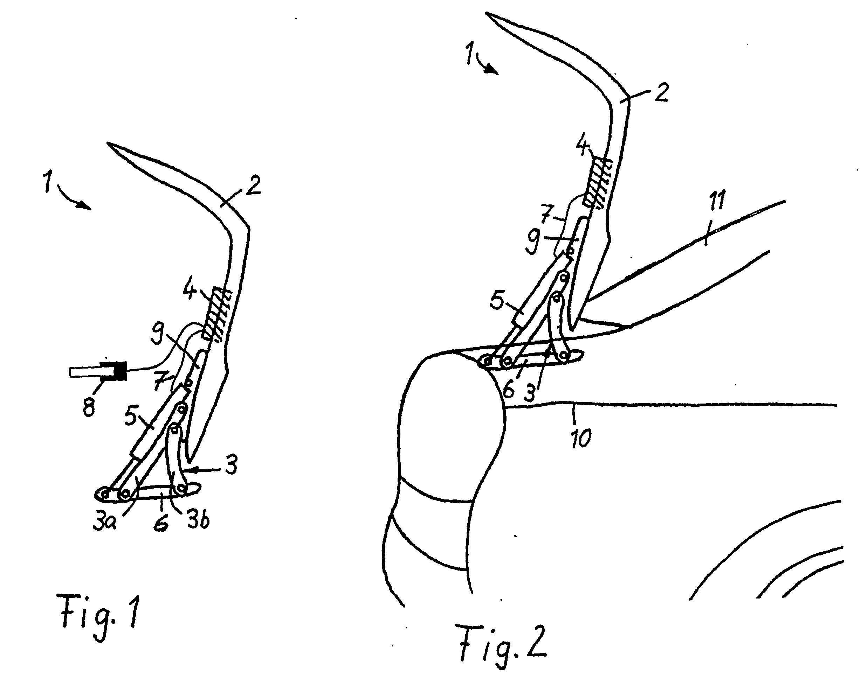

Die in Fig. 1 als vormontiertes Einbaumodul 1 ausgeführte Baueinheit umfasst eine Deckelklappe 2, eine Gelenkkinematik 3, eine Antriebseinheit, welche im Ausführungsbeispiel als Hydraulikpumpe 4 ausgeführt ist, ein Stellelement, das als Hydraulikzylinder 5 ausgebildet ist sowie eine Konsole 6, an der die Gelenkkinematik 3 sowie der Hydraulikzylinder 5 befestigt sind. Die Hydraulikpumpe 4 ist an der Unterseite der Deckelklappe 2 befestigt und versorgt über Hydraulikleitungen 7 den Hydraulikzylinder 5 mit Hydraulikfluid. Der Hydraulikzylinder 5 ist einenends gelenkig mit der Konsole und anderenends gelenkig mit einem Flansch 9 verbunden, welcher Teil der Deckelklappe 2 bzw. fest mit dieser verbunden ist. Die Gelenkkinematik 3 ist als Viergelenkkinematik ausgebildet und umfasst zwei Einzellenker 3a und 3b, welche einenends ebenfalls gelenkig mit der Konsole 6 und anderenends gelenkig mit dem Flansch 9 der Deckelklappe 2 verbunden sind. Die Hydraulikpumpe 4 ist über einen elektrischen Stecker 8 mit elektrischer Energie zu versorgen. In Einbaulage wird der Stecker 8 an die Stromversorgung des Fahrzeuges angeschlossen und kann über die Regel- und Steuereinheit des Fahrzeuges geregelt bzw. gesteuert werden.

In Fig. 2 ist das Einbaumodul 2 in seiner montierten Lage in einem Fahrzeug dargestellt. Das gesamte Modul ist mechanisch lediglich über die Konsole 6 mit der Fahrzeugkarosserie 10 verbunden, insbesondere angeschraubt. Die Deckelklappe 2 übernimmt die Funktion eines Verdeckkastendeckels, welcher zum Ablegen eines verstellbaren Fahrzeugverdeckes in einen heckseitigen Verdeckkasten zu versenken ist. Dargestellt ist in Fig. 2 eine Heckscheibe 11, welche zweckmäßig in das verstellbare Fahrzeugverdeck integriert ist und gemeinsam mit dem Verdeck abgelegt werden kann.

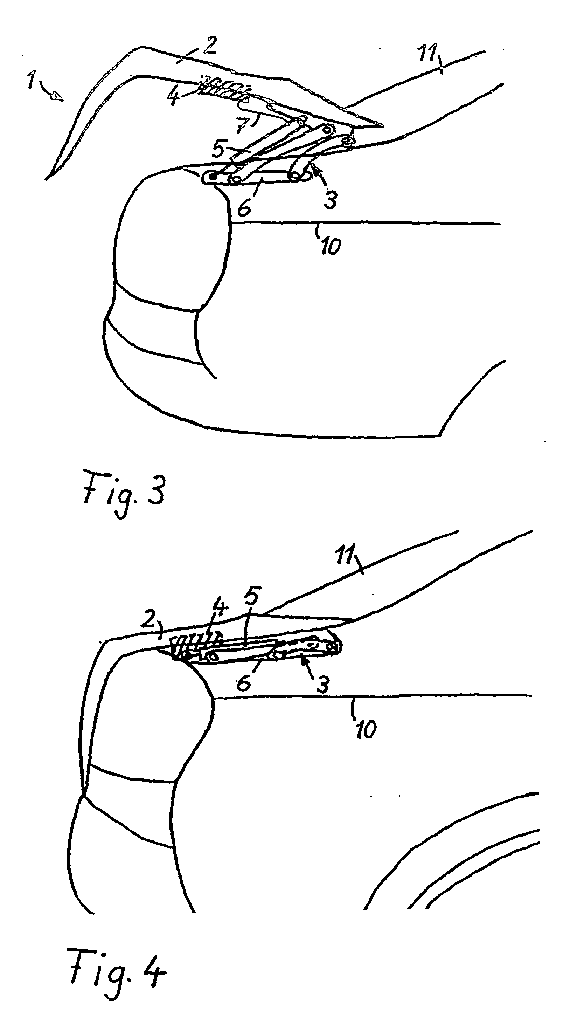

In Fig. 3 ist die Deckelklappe 2 in einer Zwischenposition zwischen geöffneter und geschlossener Lage dargestellt. Der Hydraulikzylinder 5 ist über die Betätigung der Hydraulikpumpe 4 in eine halb eingefahrene Position verstellt, wodurch der Gelenkkinematik 3 eine Schließbewegung aufgezwungen wird. Der Hydraulikzylinder 5 befindet sich in Fahrzeuglängsrichtung gesehen benachbart zur Heckseite des Fahrzeuges, hinter den Einzellenkern der Gelenkkinematik 3.

In der geschlossenen Lage gemäß Fig. 4 liegen sowohl die Einzellenker der Gelenkkinematik 3 als auch der Hydraulikzylinder 5 in einer Position etwa parallel sowohl zur Deckelklappe 2 als auch zur Konsole 6.

## Patentansprüche

1. Verschwenkbare Deckelklappe eines Cabriolet-Fahrzeugs, die über eine Gelenkkinematik (3) mit der Fahrzeugkarosserie (10) verbunden ist und zwischen einer geschlossenen und einer geöffneten Position zu verstellen ist, mit einem die Deckelklappe (2) beaufschlagenden Hydraulikzylinder (5), der über eine Hydraulikpumpe (4) zu betätigen ist, wobei die Deckelklappe (2), die Gelenkkinematik (3), der Hydraulikzylinder (5) und eine Konsole (6) ein vormontiertes Einbaumodul (1) bilden, und wobei die Gelenkkinematik (3) und der Hydraulikzylinder (5) auf ihrer der Deckelklappe (2) abgewandten Seite an der Konsole (6) abgestützt sind,
**dadurch gekennzeichnet,**
**dass** die Deckelklappe (2) ein Verdeckkastendeckel zum Verschließen eines Verdeckkastens zur Aufnahme eines verstellbaren Fahrzeugdaches ist, dass die Hydraulikpumpe (4) ebenfalls Teil des vormontierten Einbaumoduls (1) ist und an der Deckelklappe (2) gehalten ist, und dass in der geschlossenen Lage der Deckelklappe (2) sowohl die Einzellenker der Gelenkkinematik (3) als auch das Stellelement (5) in einer Position etwa parallel zur Deckelklappe (2) liegen.

## Claims

1. Pivotable cover lid for a convertible, which is connected to the vehicle body (10) via an articulated kinematic mechanism (3) and can be displaced between a closed and an open position, with a hydraulic cylinder (5) which acts upon the cover lid (2) and is to be actuated via a hydraulic pump (4), the cover lid (2), the articulated kinematic mechanism (3), the hydraulic cylinder (5) and a bracket (6) forming a preassembled installation module (1), and the articulated kinematic mechanism (3) and the hydraulic cylinder (5) being supported on the bracket (6) on their side facing away from the cover lid (2), **characterized in that** the cover lid (2) is a folding-top-compartment cover for closing a folding-top compartment for accommodating a displaceable vehicle roof, **in that** the hydraulic pump (4) is likewise part of the preassembled installation module (1) and is held on the cover lid (2), and **in that**, in the closed position of the cover lid (2), both the individual links of the articulated kinematic mechanism (3) and the adjusting element (5) are situated in a position approximately parallel to the cover lid (2).

## Revendications

1. Couvercle pivotant pour un cabriolet, qui est relié à la carrosserie du véhicule (10) par le biais d'une cinématique articulée (3) et qui doit être déplacé entre une position fermée et une position ouverte, comprenant un vérin hydraulique (5) sollicitant le couvercle (2), lequel doit être actionné par une pompe hydraulique (4), le couvercle (2), la cinématique articulée (3), le vérin hydraulique (5) et une console (6) formant un module d'intégration prémonté (1), et la cinématique articulée (3) et le vérin hydraulique (5) étant supportés sur leur côté opposé au couvercle (2) contre la console (6),
**caractérisé en ce que**
le couvercle (2) est un couvercle de compartiment de capote destiné à fermer un compartiment de capote recevant une capote de véhicule réglable, **en ce que** la pompe hydraulique (4) fait également partie du module d'intégration prémonté (1) et est maintenue sur le couvercle (2) et **en ce que**, dans la position fermée du couvercle (2), les bras individuels de la cinématique articulée (3) ainsi que l'élément de réglage (5) se trouvent dans une position approximativement parallèle au couvercle (2).
